# EUROPÄISCHE PATENTANMELDUNG

(11) **EP 1 394 421 A1**
(43) Veröffentlichungstag der Anmeldung: **03.03.2004**
(21) Anmeldenummer: 03017673.9
(22) Anmeldetag: 14.08.2003
(51) Int. Cl.: F16B 37/12, F16B 39/00, F16B 5/02

(54) **Befestigungsvorrichtung für ein an einer Platte zu befestigendes Bauteil**

(30) Priorität: 20.08.2002 DE 10238034
(71) Anmelder: EJOT GmbH & Co. KG, 57334 Bad Laasphe (DE)
(72) Erfinder: Rausch, Uwe, 99897 Tambach-Dietharz (DE); Pinzl, Wilfried, Dr., 99897 Tambach-Dietharz (DE)
(74) Vertreter: Bardehle, Heinz, Dipl.-Ing.

(57) **Zusammenfassung**

Die Erfindung betrifft eine Befestigungsvorrichtung für ein an einer Platte zu befestigendes Bauteil mit einem in einen Durchbruch (17) der Platte (2) eingesetzten Rohrstück (1), in das eine Schraube (12) eingesetzt ist, die sich mit ihrem Kopf an dem einen Ende des Rohrstücks abstützt und mit ihrem Gewindeteil das Bauteil hält, das sich an das andere Ende des zur axialen Justierung in den Durchbruch wahlweise weit eingeschraubten Rohrstücks anlegt. Das Rohrstück enthält einen Abstandsfühler (4,15), der bei von dem Bauteil (11) beabstandeten Rohrstück aus diesem in seiner Ausgangslage auf dessen dem Schraubenkopf abgewandter Seite herausragt und bei Anlage des Rohrstücks an dem Bauteil aus dem Rohrstück fühlbar verschoben ist.

## Beschreibung

Die Erfindung bezieht sich auf eine Befestigungsvorrichtung für ein an einer Platte zu befestigendes Bauteil mit einem in einen Durchbruch der Platte eingesetzten Rohrstück, in das eine Schraube eingesetzt ist, die sich mit ihrem Kopf an dem einen Ende des Rohrstücks abstützt und mit ihrem Gewindeteil das Bauteil hält, das sich an das andere Ende des zur axialen Justierung in den Durchbruch wahlweise weit eingeschraubten Rohrstücks anlegt.

Eine derartige Befestigungsvorrichtung ist aus der EP 1215404A1 bekannt. Bei dieser Befestigungsvorrichtung lässt sich die Anlage des betreffenden Endes des Rohrstücks an dem Bauteil als somit erkennbare Endstellung des Rohrstücks ermitteln, welche Anlage je nach der beim Einschrauben des Rohrstücks aufgewendeten Kraft mehr oder minder stark ausfällt.

Der Erfindung liegt die Aufgabe zugrunde, die Befestigungsvorrichtung so zu gestalten, dass die Kraft dieser Anlage für die Beendigung des Einschraubvorganges des Rohrstücks in die Platte keine Rolle spielt. Erfindungsgemäß geschieht dies dadurch, dass das Rohrstück einen Abstandsfühler enthält, der bei von dem Bauteil beabstandeten Rohrstück aus diesem in seiner Ausgangslage auf dessen dem Schraubenkopf abgewandter Seite herausragt und bei Anlage des Rohrstücks an dem Bauteil aus dem Rohrstück fühlbar verschoben ist.

Der Abstandsfühler gibt der Montageperson bzw. einem Automaten ein erkennbares Signal, dass die Anlage des Rohrstücks an dem Bauteil anzeigt, womit weder eine Anlage mit schwachem noch mit starkem Druck entstehen kann, der jeweils wegen unvermeidbarer innerer Elastizitäten der gesamten Anordnung zu Unterschieden im Abstand zwischen Platte und Bauteil führen könnte. Sowie bei dem Vorgang des Einschraubens des Rohrstücks in die Platte die Anlage des Rohrstücks an dem Rohrteil erkannt wird, ist damit das Signal gegeben, den Einschraubvorgang zu beenden, womit sich bei Verwendung der Befestigungsvorrichtung unabhängig von dem gegebenen Abstand zwischen Platte und Bauteil stets der gleiche Anlagedruck des Rohrstücks an den Bauteil und damit ein definierter Abstand zwischen Platte und Bauteil eingehalten wird, der dann auch von der hierfür vorgesehenen Befestigungsvorrichtung dauerhaft festgehalten wird.

Das Abfühlen der Verschiebung des Abstandsfühlers kann auf verschiedene Weise geschehen. Zunächst ist es möglich, die Lage des Abstandsfühlers relativ zu dem Rohrstück so zu gestalten, dass sie bei einer Verschiebung mit dem Auge, also optisch, erkennbar ist. Andererseits kann insbesondere bei automatischem Einschrauben des Rohrstücks ein mechanischer Fühler verwendet werden, der auf die Verschiebung des Abstandsfühlers in bekannter Weise reagiert. Aus dem Bereich der optischen Erfassung kommt für den Abstandsfühler gegebenenfalls auch eine Lichtschranke in Frage. Das mechanische Abfühlen kann weiterhin durch einen bekannten elektrisch oder elektromagnetisch wirkenden Abstandsensor erfolgen und dergleichen.

Zweckmäßig kann man den Abstandsfühler als in das Rohrstück eingesetzte Hülse ausbilden. Die Hülse ragt in ihrer Ausgangslage auf ihrer einen Seite aus dem Rohrstück heraus und wird dann bei Anlage des Rohrstücks an dem Bauteil in das Rohrstück hinein verschoben, wobei sie auf ihrer anderen Seite eine Lage einnimmt, die entweder optisch oder, wie oben beschrieben, in sonstiger Weise erkennbar ist. Die Hülse kann man vorteilhaft schlitzen, wobei man eine ihr innewohnende Radialspannung ausnutzen kann, die Hülse mit einer gewissen Reibung in dem Rohrstück zu halten, damit vor Anbringen der Befestigungsvorrichtung die Hülse in ihrer Ausgangslage gehalten wird.

Eine andere Möglichkeit, den Abstandsfühler in seiner Ausgangslage zu halten, besteht darin, den Abstandsfühler durch ein Federelement in seine Ausgangslage zu drücken. Aus dieser Ausgangslage wird dann der Abstandsfühler bei Anlage an dem Bauteil gegen die Kraft des Federelementes in eine rückwärtige Lage zurückgedrückt, womit dann die Möglichkeit der Signalisierung der Anlage herbeigeführt wird.

Das Federelement kann man in verschiedener Weise ausführen. Vorteilhaft gestaltet man das Federelement als aus der Hülse an ihrer dem Schraubenkopf abgewandten Seite angeordneten Schrägflächen, die mit Abschrägungen am betreffenden Ende des Rohrstücks zusammenwirken. Aufgrund dieser Schrägflächen erhält der Abstandsfühler die abgefederte Tendenz, aus dem Rohrstück herauszuragen und damit seine Ausgangslage einzunehmen, aus der es dann gegen die Wirkung der Schrägflächen und der Abschrägungen in die rückwärtige Lage zur Signalisierung der Anlage des Rohrstücks an dem Bauteil verschoben wird.

In den Figuren sind Ausführungsbeispiele der Erfindung dargestellt. Es zeigen:
- Fig. 1: die Befestigungsvorrichtung in einer Lage, in der das Rohrstück gerade in eine Platte eingesetzt ist, in der sich der als Hülse ausgebildete Abstandsfühler in seiner Ausgangslage befindet, und zwar im Schnitt gemäß der Linie I-I aus Fig. 2;
- Fig. 2: eine Draufsicht auf die Befestigungsvorrichtung gemäß Fig. 1;
- Fig. 3: die Befestigungsvorrichtung ähnlich derjenigen gemäß Fig. 1 mit weiter in die Platte eingeschraubtem Rohrstück, angenähert an ein Bauteil, und zwar mit geschlitzter Hülse;
- Fig. 4: die Befestigungsvorrichtung gemäß Fig. 1 mit weiter eingeschraubtem Rohrstück, das dicht vor seiner Anlage an dem Bauteil steht, wobei die Hülse noch nicht verschoben ist;
- Fig. 5: die Befestigungsvorrichtung gemäß Fig. 4 mit zur Anlage an dem Bauteil gebrachten Rohrstück, wobei die Hülse gegenüber dem Rohrstück in eine deutlich sichtbare Lage verschoben ist;
- Fig. 6: die Befestigungsvorrichtung gemäß Fig. 5 zusammen mit einer Schraube, mit der die Befestigungsvorrichtung an dem Bauteil fest angeschraubt ist;
- Fig. 7: die Befestigungsvorrichtung mit einem Stift als Abstandsfühler, und zwar im Schnitt gemäß der Linie VII - VII aus Fig. 8;
- Fig. 8: eine Draufsicht auf die Befestigungsvorrichtung gemäß Fig. 7.

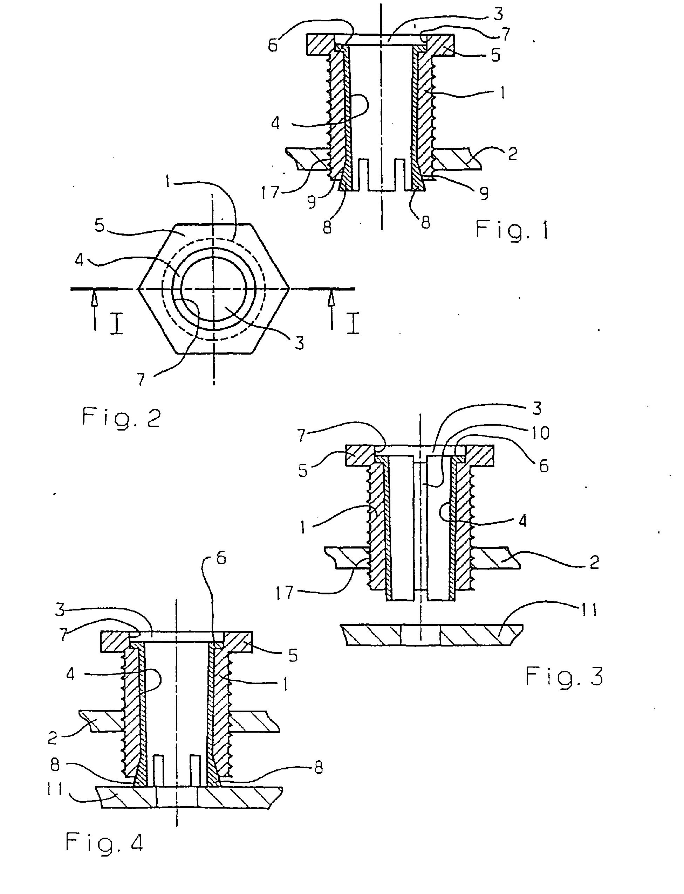

In der Figur 1 ist die Befestigungsvorrichtung mit dem Rohrstück 1 und der Platte 2 dargestellt, und zwar im Schnitt gemäss der Linie II-II aus Figur 2, wobei das Rohrstück 1 mit seinem Aussengewinde in den Durchbruch 17 der Platte 2 soweit eingeschraubt ist, wie ihr Querschnitt reicht. Bei der Platte 2 handelt es sich um irgendein Konstruktionselement, beispielsweise ein Teil der Karosserie eines Kraftfahrzeugs. Hierzu ist das Gewinde des Rohrstücks 1 so gestaltet, dass es sein Gegengewinde in der Platte 2 selbstfurchend herstellen kann. Es ist aber natürlich auch möglich, dass die Platte 2 vorher mit einem entsprechenden Gegengewinde ausgestattet ist. In das Durchgangsloch 3 des Rohrstücks 1 ist die Hülse 4 eingeschoben, die eine solche Länge aufweist, dass sie auf der dem Flansch 5 des Rohrstücks 1 abgewandten Seite aus der Platte 2 herausragt. Auf der Seite des Flansches 5 besitzt die Hülse 4 den Bund 6, der in die Aurweiterung 7 des Durchgangslochs 3 hineinragt und sich an der Stufe am Übergang von der Aufweitung 7 zum zylindrischen Teil des Durchgangslochs 3 setzt. Damit ist der Hülse 4 eine definierte Ausgangslage gegeben.

Um die in der Figur 1 dargestellte Ausgangslage der Hülse 4 gegen versehentliche Verschiebung zu sichern, besitzt die Hülse 4 an ihrem dem Bund 6 abgewandten Ende schräg verlaufende Abspreizungen 8, die mit ihren außenliegenden Schrägflächen an Abschrägungen 9 am betreffenden Ende des Rohrstücks 1 anliegen und damit im Zusammenwirken mit diesen Abschrägungen 9 der Hülse 4 die Tendenz geben, aus dem Rohrstück 1 in Richtung vom Flansch 5 weg so weit herauszugleiten, bis der Bund 6 sich in der oben beschriebenen Weise an der Stufe der Aufweiterung 7 anlegt.

In der Figur 2 ist eine Draufsicht auf die Befestigungsvorrichtung gemäß Figur 1 mit dem Rohrstück 1 und seinem Flansch 5 sowie der Hülse 4 dargestellt.

Bei der Figur 3 handelt es sich um eine Befestigungsvorrichtung, die prinzipiell derjenigen gemäß den Figuren 1 und 2 entspricht, bei der allerdings zur Sicherung der Hülse 4 gegen Verschiebung in dem Rohrstück 1 die Hülse 4 den Schlitz 10 aufweist, der dazu dient, eine radial wirkende Spreizkraft der Hülse 4 dazu auszunutzen, dass sich diese mit einer gewissen Reibung in dem Rohrstück 1 festhält. Darüber hinaus entspricht die Hülse 4 derjenigen gemäß Figur 1, wobei die Hülse 4 sich ebenfalls mit dem Bund 6 in der Aufweiterung 7 festhält und auf ihrer dem Flansch 5 abgewandten Seite aus dem Rohrstück 1 herausragt.

In der Figur 3 ist noch das Bauteil 11 eingezeichnet, das sich in einem durch die jeweilige Gesamtkonstruktion bedingten Abstand von der Platte 2 befindet, der bei der Anbringung der Befestigungsvorrichtung zu berücksichtigen und beizubehalten ist.

In der Figur 4 ist das Bauteil gemäß den Figuren 1 und 2 zusammen mit der Platte 2 und dem Bauteil 11 in einer Lage dargestellt, in der gegenüber der Annäherung gemäß Figur 3 die Befestigungsvorrichtung nunmehr soweit in die Platte 2 eingeschraubt ist, dass die Hülse 4 mit ihren Abspreizungen 8 auf das Bauteil 11 auftrifft.

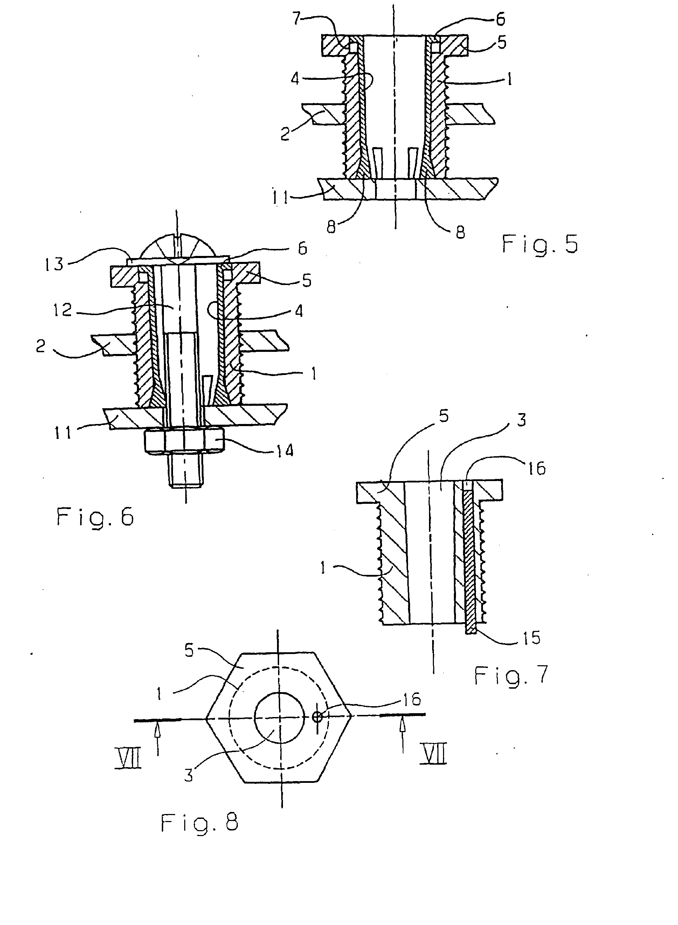

Wenn nun das Rohrstück 1 weiterhin in die Platte 2 eingeschraubt wird, ergibt sich schließlich die in der Figur 5 dargestellte Relativlage von Rohrstück 1 und Platte 2, in der unter Beibehaltung des Abstandes zwischen Platte 2 und Bauteil 11 das dem Flansch 5 abgewandte Ende des Rohrstücks 1 an dem Bauteil 11 zur Anlage kommt. In dieser derart justierten Position des Rohrstücks 1 hat sich die Hülse 4 in dem Rohrstück 1 soweit verschoben, dass, wie die Figur 5 zeigt, der Bund 6 der Hülse 4 an seiner Außenseite gerade mit der Oberfläche des Flansches 5 abschließt und damit nach außen deutlich sichtbar wird. Damit signalisiert die so in ihre rückwärtige Lage geschobene Hülse der Montageperson, dass jetzt das Rohrstück 1 gerade soweit in die Platte 2 eingeschraubt ist, dass sie mit ihrem dem Flansch 5 abgewandten Ende an dem Bauteil 11 anliegt, womit die endgültige Lage des Rohrstücks 1 gefunden ist, die damit auch beibehalten wird.

Die vorstehend beschriebene Verschiebung der Hülse 4 kann auch dazu benutzt werden, dass ein an einem Montagewerkzeug befindlicher Sensor feststellt, dass der Bund 6 die in der Figur 5 dargestellte Lage erreicht hat. Das Montagewerkzeug besitzt zu diesem Zweck ein Sechskantfutter, das mit der in Figur 2 dargestellten Sechskantgestaltung des Bundes 5 übereinstimmt und somit das Rohrstück 1 sicher eindrehen kann. Das Montagewerkzeug ist mit einem entsprechenden Sensor in bekannter Weise ausgestattet, der mit Erreichen der in Figur 5 dargestellten Lage des Bundes 6 anspricht und damit das Ende des Eindrehvorganges signalisiert.

Wenn aus irgendeinem Grund das Rohrstück 1 aus der Platte 2 wieder herausgeschraubt wird, dann verschiebt sich auf Grund der Wirkung der im Zusammenhang mit der Figur 1 dargestellten Abspreizungen 8 und der Abschrägungen 9 die Hülse 4 zurück in ihre in der Figur 4 dargestellte Ausgangslage, womit also die Befestigungsvorrichtung auch mehrfach an- und wieder abgeschraubt werden kann, wobei die Hülse 5 jeweils in ihre Ausgangslage gemäß Figur 4 bzw. ihre rückwertige Lage in Figur 5 hin und her geschoben werden kann.

In der Lage der Befestigungsvorrichtung gemäß Figur 5 lässt sich nunmehr mittels der Schraube 12 eine sichere Verbindung zwischen der Platte 2 und dem Bauteil 11 herbeiführen. Die Schraube 12 stützt sich dabei mit ihrem Bund auf das Rohrstück 1. Mittels der Mutter 14 wird dann das Bauteil 11 in Bezug auf das Rohrstück 1 festgehalten, wobei das in die Platte 2 eingeschraubte Rohrstück 1 dafür sorgt, dass sich auf Grund der festgezogenen Schraube 12 der Abstand zwischen der Platte 2 und dem Bauteil 11 nicht verändert, das heißt an der Platte 2 ist nunmehr das Bauteil 11 in definiertem vorher gegebenen Abstand eindeutig festgehalten.

In der Figur 7 ist eine Variante des Abstandsfühlers dargestellt, der hier als Stift 15 ausgebildet ist. Der Stift 15 ist in eine Längsbohrung 16 des Rohrstücks 1 eingelassen und ragt auf seiner dem Flausch 5 abgewandten Seite in der gleichen Weise heraus, wie dies in Figur 1 im Zusammenhang mit den Abspreizungen 8 beschrieben ist. Der Stift 15 lässt sich axial bei seinem Auftreffen auf ein Bauteil 11 verschieben und erreicht dann an der Oberseite des Flansches 5 eine Lage, in der er einerseits gut sichtbar ist, andererseits gegebenenfalls einen Sensor betätigt, wie dies im Zusammenhang mit der Figur 5 beschrieben ist.

Der Stift 15 kann auch durch ein Federelement in seiner in der Figur 7 dargestellten Ausgangslage gehalten werden, das beispielsweise darin bestehen kann, dass der Stift 15 auf seiner dem Flansch 5 abgewandten Seite Aufspreizungen aufweist, die sich gegen entsprechende Abschrägungen in der Längsbohrung 16 abstützen.

Figur 8 zeigt eine Draufsicht auf die Befestigungsvorrichtung gemäß Figur 7, aus der die Längsbohrung 16 ersichtlich ist, in der der Stift 15 geführt ist.

## Patentansprüche

1. Befestigungsvorrichtung für ein an einer Platte (2) zu befestigendes Bauteil (11) mit einem in einen Durchbruch (17) der Platte (2) eingesetzten Rohrstück (1), in das eine Schraube (12) eingesetzt ist, die sich mit ihrem Kopf (13) an dem einen Ende des Rohrstücks (1) abstützt und mit ihrem Gewindeteil das Bauteil (11) hält, das sich an das andere Ende des zur axialen Justierung in den Durchbruch (17) wahlweise weit eingeschraubten Rohrstücks (1) anlegt, **dadurch gekennzeichnet, dass** das Rohrstück (1) einen Abstandsfühler (4, 15) enthält, der bei von dem Bauteil (11) beabstandeten Rohrstück (1) aus diesem in seiner Ausgangslage auf dessen dem Schraubenkopf (13) abgewandter Seite herausragt und bei Anlage des Rohrstücks (1) an dem Bauteil (11) aus dem Rohrstück (1) fühlbar verschoben ist.

2. Befestigungsvorrichtung nach Anspruch 1, **dadurch gekennzeichnet, dass** der Abstandsfühler als in das Rohrstück (1) eingesetzte Hülse (4) ausgebildet ist.

3. Befestigungsvorrichtung nach Anspruch 2, **dadurch gekennzeichnet, dass** die Hülse (4) geschlitzt ist.

4. Befestigungsvorrichtung nach Anspruch 1, **dadurch gekennzeichnet, dass** der Abstandsfühler als axial in dem Rohrstück (1) geführter Stift (15) ausgebildet ist.

5. Befestigungsvorrichtung nach einem der Ansprüche 1 bis 4, **dadurch gekennzeichnet, dass** der Abstandsfühler (4, 15) durch ein Federelement (8) in seine Ausgangslage gedrückt ist.

6. Befestigungsvorrichtung nach Anspruch 5, **dadurch gekennzeichnet, dass** das Federelement aus an der Hülse (4) an ihrer dem Schraubenkopf (13) abgewandten Seite angeordneten Schrägflächen (9) besteht, die mit Abschrägungen (8) am betreffenden Ende des Rohrstücks (1) zusammenwirken.
